# EUROPEAN PATENT SPECIFICATION

(11) **EP 4 408 373 B1**
(45) Date of publication and mention of the grant of the patent: **22.10.2025**
(21) Application number: 22790032.1
(22) Date of filing: 23.09.2022
(51) Int. Cl.: A61J 3/07

(54) **DEVICE AND METHOD FOR FEEDING CAPSULES**
VORRICHTUNG UND VERFAHREN ZUM ZUFÜHREN VON KAPSELN
APPAREIL ET PROCÉDÉ D'ALIMENTATION EN CAPSULES

(30) Priority: 27.09.2021 IT 202100024605
(43) Date of publication of application: 07.08.2024
(73) Proprietor: I.M.A. Industria Macchine Automatiche S.p.A., 40064 Ozzano dell'Emilia (BO) (IT)
(72) Inventor: RIBANI, Massimo, 40064 Ozzano dell'Emilia (BO) (IT)
(74) Representative: Cicconetti, Andrea
(86) International application number: PCT/IB2022/059026
(87) International publication number: WO 2023/047354

(56) References cited:
- EP-B1- 2 846 756
- DE-A1- 102004 004 357

## Description

The present invention concerns automatic machines for filling capsules or opercula or similar elements with pharmaceutical and food products, and in particular it refers to an apparatus and a method for feeding capsules to an automatic filling machine.

Various types of filling machines are known, which are arranged to fill capsules, in particular lid-body capsules made of hard gelatin, with pharmaceutical or food products in liquid form, in powder, granules, tablets, micro-tablets, pellets, etc.

The known filling machines typically comprise transfer means that move the capsules through the different operating stations.

Filling machines are known in which the transfer means comprise a transfer turret or wheel, rotating about a vertical axis and provided with seats suitable for receiving the capsules, and a plurality of operating stations arranged around the transfer turret to perform operations on the capsules. The transfer turret by rotating moves the capsules through said operating stations, which typically comprise a feeding station, one or more dosing stations, a capsule closing station and a reject station of non-compliant capsules.

In the feeding station there is provided a feeding apparatus that picks empty capsules from a magazine or hopper and, after having correctly oriented them, typically with the lid above the body with reference to a vertical feeding direction, inserts the capsules in the seats of the transfer turret. Suitable means open the capsules by separating the lids from the bodies.

One or more dosing stations dose respective products into the capsule bodies.

In the closing station, the lids are again coupled to the respective bodies so as to close and reassemble the dosed caps that are conveyed out of the filling machine.

In the reject station, non-compliant capsules are eliminated, for example because they have a double lid, or because they contain too much or too little product, as verified by a measurement of capsule weight that is carried out in a previous weighing station of the filling machine.

The feeding apparatus of the feeding station comprises one or more feeding conduits that are parallel to each other and almost vertical and that draw the capsules from an overlying magazine or hopper, in which the capsules lie in bulk form, and convey the capsules to the seats of the transfer turret. Each feeding conduit allows a plurality of capsules arranged aligned on top of each other to form a single row to go down by gravity. Blocking means allow one single capsule at a time exiting from the respective feeding conduit and entering the underlying seat of the transfer turret.

The number of feeding conduits is equal to the number of seats that are provided in the transfer turret sector which is positioned at the feeding station.

Orientation means are associated with each feeding conduit to orient the capsules so that they are inserted into the corresponding seats typically with the lid up and the body down.

Orientation means are known that comprise for each feeding conduit a horizontal pusher element and a vertical pusher element which act on the capsule which remains blocked inside the conduit at a section narrowing thereof. More precisely, the width of the conduit is slightly lower than the width of the capsule lid which, in the absence of external forces, remains thus blocked. However, due to the slight interference thus created and the elasticity of the material (hard gelatin) of which the capsule is made, the capsule can be easily rotated and then moved inside the conduit in the underlying seat of the transfer turret by the horizontal pusher element, which acts in a direction almost orthogonal to the conduit, and by the vertical pusher element, which acts inside the conduit. The shape of abutment portions of horizontal and vertical pusher elements allows each capsule to be rotated so that it is inserted into the seat of the transfer turret with the lid up and the body down.

Capsule feeding apparatuses for filling machines provided with such orientation means are described for example in documents US2011/0146843 and WO2013/168086.

Document DE 102004004357 discloses a machine for filling hard gelatin capsules with a pharmaceutical powder product that comprises a hopper, suitable for containing a plurality of empty capsules, a feeding conduit for sequentially conveying the capsules from the hopper to an underlying capsule holder element and capsule orientation means for correctly orienting the capsules. The orientation means include a rotating drum provided with a radial through recess suitable for receiving one capsule at a time from the feeding conduit. In particular, the feeding conduit comprises a first oblique descending channel, which allows the descent by gravity of one capsule at a time and which opens into a second horizontal channel in which the capsule stops to be then pushed by a horizontal pusher inside the radial recess of the rotating drum. The rotating drum is rotated by 90° clockwise or counterclockwise based on the initial orientation of the capsule detected by a sensor. In this way, suitably rotated, the drum releases each capsule with the required orientation into an underlying vertical conduit which leads to the capsule holder element.

An object of the present invention is to improve the known feeding apparatuses arranged to feed with capsules, or similar elements, filling machines.

Another object is to provide a compact and not bulky feeding apparatus having simple and reliable structure and operation.

A further object is to manufacture a feeding apparatus that allows detecting any defective capsules coming from a hopper.

In a first aspect of the invention there is provided a feeding apparatus associable with a filling machine according to claim 1.

In a second aspect of the invention there is provided a method for feeding capsules according to claim 10.

The invention can be better understood and implemented with reference to the attached drawings which illustrate an exemplary and non-limiting embodiment thereof, in which:
- figure 1 is a schematic section of the feeding apparatus of the invention in a first operating step;
- figure 2 is a section along line II-II of figure 1;
- figure 3 is a section like the one of figure 1 illustrating the feeding apparatus in a second operating step;
- figure 4 is a section along line IV-IV of figure 3;
- figure 5 is a section like the one of figure 1 illustrating the feeding apparatus in a third operating step;
- figure 6 is a section along line IV-IV of figure 5;
- figure 7 is a section like the one of figure 1 illustrating the feeding apparatus in a fourth operating step;
- figure 8 is a section along line VIII-VIII of figure 7;
- figure 9 is a section like the one of figure 1 illustrating the feeding apparatus in a fifth operating step;
- figure 10 is a section along line X-X of figure 9;
- figure 11 is a section like the one of figure 1 illustrating the feeding apparatus in a sixth operating step;
- figure 12 is a section along line XII-XII of figure 11;
- figure 13 is a front view of two capsules fed by the feeding apparatus of the invention respectively arranged with a first orientation and a second orientation with reference to a movement direction.

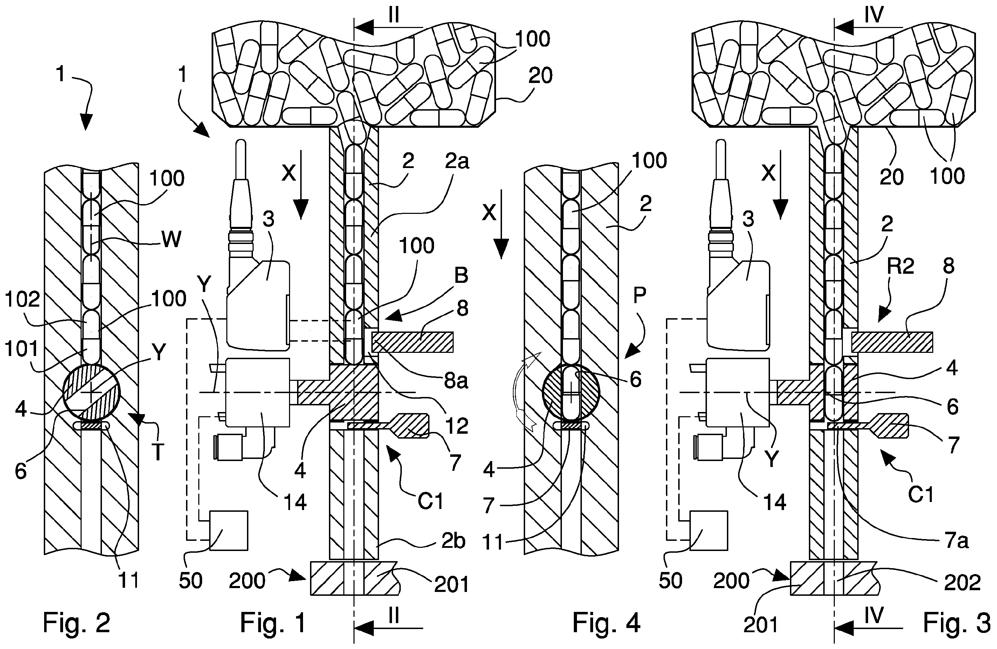

With reference to figures 1 to 12, a feeding apparatus 1 according to the invention is schematically illustrated that is associable with a filling machine 200 in order to provide transfer means 201 thereof with capsules 100, in particular made of hard gelatin, formed by a lid 101 and a body 102.

The transfer means 201 comprise, for example, a transfer wheel or turret of a known type, provided with seats 202 suitable for receiving capsules 100 from the feeding apparatus 1.

The feeding apparatus 1 comprises a container or hopper 20 suitable for containing a plurality of capsules 100, at least one feeding conduit 2 for taking the capsules 100 from the hopper 20 and conveying them towards the transfer means 201, the capsules 100 aligned one after the other in contact along a feeding direction X to form a single row. More precisely, the feeding direction X is almost vertical and the capsules 100 are arranged in the feeding conduit 2 with a respective longitudinal axis W (axis of symmetry of the capsule along the dimension of greater length) parallel to the feeding direction X and can freely slide, in particular go down, by gravity along the feeding conduit 2 from the hopper 20 to the transfer means 201.

The feeding apparatus 1 further comprises sensor means 3 associated to the feeding conduit 2 and configured to detect an orientation A, B of the capsules 100 within the feeding conduit 2. More precisely, the sensor means 3 are configured to detect a reciprocal position between the lid 101 and the body 102 of each capsule 100 while passing through the feeding conduit 2, in order to detect whether each capsule 100 has a predefined first orientation A between the lid 101 and the body 102 with respect to the feeding direction X, which is considered correct, or a second orientation B, opposite to the first orientation, which is instead considered wrong.

The capsules 100 inside the hopper 20 are in fact inserted in the feeding conduit 2 with random orientation, i.e. with the bodies 102 facing the transfer means 201, i.e. downwards, with the first orientation A or with the lids 101 facing the transfer means 201, i.e. downwards, with the second orientation B.

Typically, the orientation of capsules 100 required in the filling machines is the first orientation A with the bodies 102 facing downwards to allow an easier detachment (and subsequent coupling) of the lids 101.

To this end, the feeding apparatus 1 also comprises orientation means 4 positioned downstream of sensor means 3 with respect to the feeding direction X and associated to the feeding conduit 2 and configured to receive and house one at a time the capsules 100 located inside the feeding conduit 2 and then rotate by 180° about a rotation axis Y, which is substantially orthogonal to the feeding direction X, each capsule 100 that has been detected by the sensor means 3 moving oriented according to the wrong second orientation B, and to be passed through without rotating by the capsules 100 that have been detected by the sensor means 3 moving oriented according to the correct first orientation A. In this way, all the capsules 100 are oriented according to the first correct orientation A when they reach the underlying transfer means 201.

The feeding conduit 2 comprises a first section 2a, positioned directly upstream of the orientation means 4, and a second section 2b, positioned between the orientation means 4 and the transfer means 201, the first section 2a and second section 2a being vertically arranged, in particular along the feeding direction X.

The orientation means 4 comprise an orientation element, having a substantially cylindrical shape, transversely fit into the feeding conduit 2 and rotatable about the rotation axis Y. The orientation element 4 is provided with a transverse through seat 6, in particular almost orthogonal to rotation axis Y, and arranged vertically aligned when receiving a capsule 100 from the first section 2a of the feeding conduit 2, in particular when said orientation element 4 is rotated in a passage position P. The through seat 6 is dimensioned to house a single capsule 100.

The feeding apparatus further comprises blocking means 7, positioned adjacent to, and downstream of, the orientation means 4, with reference to the feeding direction X and more precisely to a movement direction of the capsules 100 along the feeding conduit 2, and insertable in the second section 2b of feeding conduit 2 in order to block the passage of the capsules 100, in particular to retain a capsule 100 inside the through cavity 6 of orientation element 4 that is arranged in the passage position P.

The blocking means comprise a blocking element 7 provided with a flat end portion 7a adapted to be inserted into a transverse groove 11 made in the second section 2b of the feeding conduit 2, adjacent to, and under, the orientation means 4. In particular, the transverse groove 11 is orthogonal to the feeding direction X.

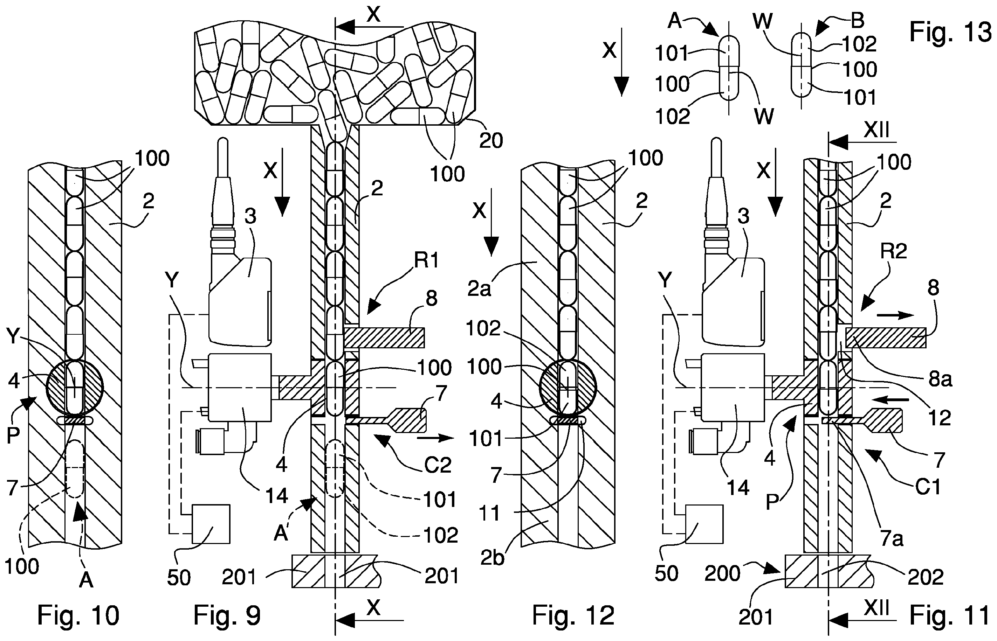

The blocking element 7 is moved linearly by respective actuator means, of known type and not illustrated in the figures, between a blocking position C1 (fig. 1) in which the blocking element is partially inserted in the transverse groove 11 with the end portion 7a, and an opening position C2 (fig. 9), in which the blocking element is disengaged from the feeding conduit 2 and allows the passage of the capsule 100.

The feeding apparatus further comprises stopping means 8 positioned adjacent to, and upstream of, the orientation means 4, with reference to the feeding direction X and more precisely to the movement direction of the capsules 100 along the feeding conduit 2, and insertable in the first section 2a of the feeding conduit 2 to abut and stop a capsule 100, preventing the insertion thereof in the orientation means 4, in particular in the through cavity 6 of the orientation element 4.

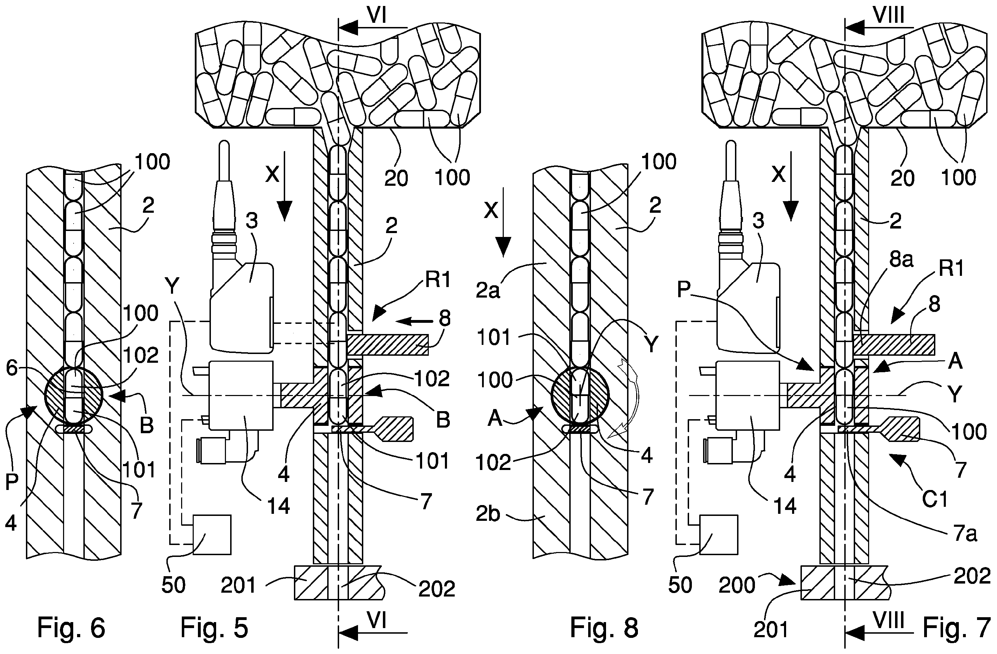

The stopping means comprise a stopping element 8 provided with a respective end portion 8a adapted to be inserted in a lateral opening 12 made in the first section 2a of the feeding conduit 2 adjacent to and above the orientation means 4. The stopping element 8 is linearly moved by respective actuator means, of known type and not illustrated in the figures, between an abutment position R1 (fig. 5), in which said stopping element 8 is partially inserted in the lateral opening 12 in order to abut and stop with the respective end portion 8a a capsule 100, and a disengagement position R2 (fig. 1), in which said stopping element 8 is disengaged from the feeding conduit 2 and allows the passage of the capsule 100.

The sensor means 3 are positioned adjacent to, and upstream of, the orientation element 4, in particular to detect a first orientation A or a second orientation B of the capsule 100 blocked in the feeding conduit 2 by the stopping means 8.

The sensor means 3 comprise, for example, an optical sensor capable of detecting, in addition to the orientation of the capsules 100, possible defects thereof, in particular capsules 100 provided with two lids 101 coupled to the same body 102.

The feeding apparatus 1 comprises a control unit 50 connected to sensor means 3 and to driving means 14 of the orientation means 4 and configured to control said driving means 14 based on signals sent by the sensor means 3 and relating to a detected orientation (first orientation A or second orientation B) of a capsule 100. The control unit 50 also controls the actuator means of blocking means 7 and stopping means 8.

The control unit can also be the control unit of the filling machine 200.

The driving means 14 comprise a rotary motor of known type, for example electric or pneumatic motor, connected to the orientation element 4 and arranged to rotate the orientation element by 180° about the rotation axis Y.

In a variant of the invention not illustrated in the figures, the feeding apparatus 1 comprises a plurality of feeding conduits 2, in particular parallel to each other, respective sensor means 3 and orientation means 4 being associated with each feeding conduit. The feeding conduits 2, fed by the same hopper 20, can be arranged aligned according to one or more rows.

The operation of the feeding apparatus 1 of the invention associated with a filling machine 200 for capsules 100 provided with transfer means 201 (to transfer the capsules through the several operating stations not illustrated of the filling machine 200) provides in a first initial step to arrange the orientation means 4 associated with the feeding conduit 2 of the capsules 100 in a stopping position T, so as to block in the feeding conduit 2 the capsules 100 positioned upstream of the orientation means 4 and coming from a hopper 20, to move the blocking means 7 in the blocking position C1 in order to block the feeding conduit 2 downstream of the orientation means 4 and to detect with sensor means 3 a first orientation A or a second orientation B of a capsule 100 that is blocked in the feeding conduit 2, in particular that abuts the orientation means 4.

In a second step, the orientation means 4 are rotated by the driving means 14 about the rotation axis Y in the passage position P to allow the capsule 100 adjacent to and abutting the orientation means 4 to be inserted in the through cavity 6 of the orientation means (figures 3 and 4).

In a third step, the stopping means 8 are moved into the abutment position R1 in order to block in the feeding conduit 100 a capsule 100 adjacent to and upstream of the orientation means 4 and the sensor means 3 are activated to detect a first orientation A or a second orientation B of said blocked capsule 100 (Figures 5 and 6).

In a fourth step, the orientation means 4 are either rotated by 180° about the rotation axis Y if the capsule 100 contained in the through cavity 6 has the second orientation B, so as to arrange the capsule with the first orientation A or they are not rotated, but maintained fixed in the passage position P, if the capsule 100 already has the first orientation A (figures 7 and 8).

In a fifth step, the blocking means 7 are moved into the opening position C2 so as to open the feeding conduit 2 and allow the capsule 100 arranged in the first configuration A to leave the orientation means 4 and go down towards transfer means 201 (figures 9 and 10).

In a sixth step, the blocking means 7 are moved in the blocking position C1 to block the feeding conduit 2 downstream of orientation means 4 and the stopping means 8 are moved into the disengagement position R2 in order to release the capsule 100 that can be inserted in the orientation means 4, in particular in the through cavity 6 of orientation element 4. The third, fourth, fifth and sixth steps are then repeated for each of the capsules 100 coming from the hopper 20.

Thanks to the feeding apparatus 1 of the invention, it is therefore possible to feed a filling machine 200 with capsules 100 having the correct orientation, in particular the first orientation A in which the body 102 of the capsule is facing downwards, towards the transfer means 201 of the filling machine 100. The sensor means 3 allow, in fact, to detect the orientation of each capsule 100 inside the feeding conduit 2 in such a way as to allow the orientation means 4 to be activated in rotation and to overturn, i.e. to rotate by 180°, one at a time all the capsules 200 coming from the hopper 20 and having a wrong orientation (the second orientation B).

Since detection of the orientation of capsules 100 and rotation of the orientation means 4 take place in a very short time, the feeding apparatus 1 of the invention also allows to feed filling machines having high production rates.

The feeding apparatus 1 of the invention is also particularly compact and not bulky and has a simple and reliable structure and operation. The orientation means 4 comprise in fact a single cylindrical-shaped orientation element, which is fit into the feeding conduit 2 between a first and a second section 2a, 2b thereof and is provided with a transverse through seat 6 suitable for receiving and house one capsule at a time. The orientation element 4 is directly actuated, in particular rotated by 180°, when necessary, by driving means 14, comprising a rotary motor of known type, for example electric or pneumatic motor, having small size and limited cost.

The sensor means 3 also allow to identify possible defective capsules coming from the hopper 20, for example capsules 100 provided with two lids 101 coupled to a same body 102. In this way, these defective capsules can be rejected in the filling machine before being filled with the product or excluded from the filling, avoiding waste of dosed product.

The method according to the invention for feeding with capsules 100, which are formed by a lid 101 and a body 102, transfer means 201 of a filling machine 200, comprises the steps of:
- arranging a hopper 20 suitable for containing a plurality of capsules 100;
- arranging at least one feeding conduit 2 configured to convey the capsules 100 from the hopper 20 towards the transfer means 201 of the filling machine 200 in a single row aligned along a feeding direction X;
- detecting by means of sensor means 3 a reciprocal position between lid 101 and body 102 of each capsule 100 while passing through the feeding conduit 2, in order to detect whether each capsule 100 has a predefined first orientation A between the lid 101 and the body 102 with respect to the feeding direction X, which is considered correct, or a second orientation B, opposite to the first orientation A, which is instead considered wrong;
- arranging orientation means 4 associated with the feeding conduit 2 and comprising a through seat 6 that is sized to be passed through by the capsules 100;
- arranging the orientation means 4 with the through seat 6 that is vertical; and
- rotating by 180°, by means of orientation means 4 in particular rotated in a passage position P, about a rotation axis Y, which is substantially orthogonal to the feeding direction X, each capsule 100 that has been detected by the sensor means 3 moving oriented according to the wrong second orientation B; or
- allowing advancing, without rotating, through the through seat 6 of orientation means 4 each capsule 100 that has been detected by the sensor means 3 moving oriented according to the correct first orientation A;
so that all the capsules 100 are oriented according to the correct first orientation A when they reach the transfer means 201, wherein the feeding conduit 2 comprises a first section 2a, positioned directly upstream of the orientation means 4, and a second section 2b, positioned between orientation means 4 and transfer means 201, the first section and second section 2a, 2b being vertically aligned.

The method further comprises:
- arranging stopping means 8 associated with the feeding conduit 2, adjacent to and upstream of the orientation means 4 with reference to the feeding direction X and configured to abut and block advancement of capsules 100;
- moving the stopping means 8 in an abutment position R1 in order to block a capsule 100 in the feeding conduit 2; and
- detecting by means of sensor means 3 a first orientation A or a second orientation B of the capsule 100.

The method also comprises:
- arranging blocking means 7 adjacent to and downstream of orientation means 4, with reference to the feeding direction X, and insertable in the second section 2b of the feeding conduit 2 in order to block the passage of capsules 100, in particular in order to retain a single capsule 100 inside the orientation means 4;
- moving the blocking means 7 in an opening position C2 so as to open the feeding conduit 2 downstream of orientation means 4 and allow the capsule 100 exiting the orientation means 4 and to go down towards the transfer means 201.

The method further comprises:
- moving the blocking means 7 in a blocking position C1 so as to block the feeding conduit 2 downstream of orientation means 4; and
- moving the stopping means 8 in a disengagement position R2 so as to release the capsule 100 and to allow the orientation means 4 to receive it.

The method comprises rotating by 180° the orientation means 4 about an almost orthogonal rotation axis Y and said feeding direction X, in particular the feeding direction being substantially vertical.

It is also provided to arrange the capsules 100 coming from the hopper 100 in the feeding conduit 2, in particular with random orientation, and with a respective longitudinal axis W parallel to the feeding direction X. The capsules 100 are arranged with the first orientation A wherein the respective bodies 102 face the transfer means 201 and with the second orientation B wherein the respective lids 101 face the transfer means 201.

The method further comprises detecting by means of sensor means 3 possible defects of the capsules 100, in particular capsules comprising two lids 101 coupled to the same body 102. According to the method, the capsules 100 reach the orientation means 4 by falling down vertically along the first section 2a of the feeding conduit 2.

## Claims

1. Feeding apparatus (1) of a filling machine (200) for feeding capsules (100) formed by a lid (101) and a body (102), comprising:
- a hopper (20) suitable for containing a plurality of capsules (100);
- at least one feeding conduit (2) for conveying the capsules (100) from said hopper (20) towards transfer means (201) of said filling machine (200) in a single row aligned along a feeding direction (X);
- sensor means (3) associated to said feeding conduit (2) and configured to detect a reciprocal position between the lid (101) and the body (102) of each capsule (100) while passing through said feeding conduit (2), in order to detect whether each capsule (100) has a predefined first orientation (A) between the lid (101) and the body (102) with respect to the feeding direction (X) which is considered correct, or a second orientation (B), opposite to the first orientation (A), which is instead considered wrong; and
- orientation means (4) located downstream of sensor means (3) with respect to the feeding direction (X) and associated to said feeding conduit (2);
**characterized in that** said orientation means (4) are configured:
- to rotate by 180° about a rotation axis (Y), substantially orthogonal to said feeding direction (X), each capsule (100) which has been detected by the sensor means (3) moving oriented according to the wrong second orientation (B), and
- to be passed through without rotating by each capsule (100) which have been detected by the sensor means (3) moving oriented according to the correct first orientation (A),
so that all the capsules are oriented according to the correct first orientation (A) when they reach the transfer means (201), said feeding conduit (2) comprising a first section (2a) positioned directly upstream the orientation means (4) and a second section (2b) positioned between said orientation means (4) and said transfer means (201), said first section and second section (2a, 2b) being arranged vertically aligned.

2. Feeding apparatus (1) according to claim 1, wherein said orientation means comprise an orientation element (4), having a substantially cylindrical shape, fit into said feeding conduit (2) and rotatable about said rotation axis (Y), said orientation element (4) comprising a through seat (6), which is substantially orthogonal to said rotation axis (Y), arranged vertically aligned when receiving the capsule (100) from said first section (2a) and sized to house a single capsule (100).

3. Feeding apparatus (1) according to claim 1 or 2, comprising blocking means (7) positioned adjacent to, and downstream of, said orientation means (4), with reference to said feeding direction (X), and insertable in said second section (2b) of said feeding conduit (2) in order to block the passage of said capsules (100), in particular to retain a single capsule (100) within said orientation means (4).

4. Feeding apparatus (1) according to any preceding claim, comprising stopping means (8) positioned adjacent to, and upstream of, said orientation means (4) with reference to said feeding direction (X) and configured to abut and stop advancement of capsules (100).

5. Feeding apparatus (1) according to claim 4, wherein said sensor means (3) are positioned upstream of said stopping means (8) with reference to said feeding direction (X).

6. Feeding apparatus (1) according to claim 4 or 5, wherein said stopping means (8) are partially inserted into a lateral opening (12) made on said first section (2a) of said feeding conduit (2) and configured mobile between an abutment position (R1) to block the capsule (100) falling down, and a disengagement position (R2) to allow the capsule (100) moving.

7. Feeding apparatus (1) according to any preceding claim, wherein said at least one feeding conduit (2) is a plurality of feeding conduits (2) arranged parallel to each other, each feeding conduit (2) being associated with respective sensor means (3) and respective orientation means (4).

8. Feeding apparatus (1) according to any preceding claim, wherein said sensor means (3), in particular of optical type, are configured to detect possible defects of said capsules (100), in particular capsules (100) provided with two lids (101) coupled to a common body (102).

9. Feeding apparatus (1) according to any preceding claim, comprising a control unit (50) connected to said sensor means (3) and to driving means (14) of said orientation means (4), said control unit (50) being configured to control said driving means (14) based on signals sent by said sensor means (3) relating to orientation of each capsule (100).

10. Method for feeding capsules (100) formed by a lid (101) and a body (102) to transfer means (201) of a filling machine (200), comprising:
- arranging a hopper (20) suitable for containing a plurality of capsules (100);
- arranging at least one feeding conduit (2) configured to convey the capsules (100) from said hopper (20) towards said transfer means (201) of said filling machine (200) in a single row aligned along a feeding direction (X);
- detecting by sensor means (3) a reciprocal position between the lid (101) and the body (102) of each capsule (100) while passing through the feeding conduit (2), so as to detect whether each capsule (100) has an established first orientation (A) between the lid (101) and the body (102) with respect to the feeding direction (X), which is considered correct, or a second orientation (B), opposite to the first orientation (A), which is instead considered wrong;
- arranging orientation means (4) associated with said feeding conduit (2) and comprising a through seat (6) sized to be passed through by the capsules (100);
**characterized in that** it further comprises:
- arranging said orientation means (4) with the through seat (6) that is vertical; and
- rotating by 180° by means of said orientation means (4) about a rotation axis (Y), which is substantially orthogonal to said feeding direction (X), each capsule (100) which has been detected by the sensor means (3) moving oriented according to the wrong second orientation (B); or
- allowing advancing without rotating, through said through seat (6), each capsule (100) that has been detected by the sensor means (3) moving oriented according to the correct first orientation (A);
so that all the capsules (100) are oriented according to the correct first orientation (A) when they reach the transfer means (201), wherein said feeding conduit (2) comprises a first section (2a) positioned directly upstream of orientation means (4) and a second section (2b) positioned between said orientation means (4) and said transfer means (201), said first section and second section (2a, 2b) being arranged vertically aligned.

11. Method according to claim 10, comprising arranging said capsules (100) coming from said hopper (100) in said feeding conduit (2) with a respective longitudinal axis (W) parallel to said feeding direction (X), said capsules (100) being arranged in said first orientation (A) when their respective bottoms (102) are facing said transfer means (201) and in said second orientation (B) when their respective lids (101) are facing said transfer means (201).

12. Method according to claim 10 or 11, further comprising detecting by means of said sensor means (3) possible defects of said capsules (100), in particular capsules comprising two lids (101) coupled to a common body (102).

13. Method according to any of claims 10 to 12, wherein the capsules (100) reach the orientation means (4) by falling down vertically along the first section (2a).

## Patentansprüche

1. Zuführvorrichtung (1) einer Füllmaschine (200) zum Zuführen von Kapseln (100), die aus einem Deckel (101) und einem Körper (102) bestehen, aufweisend:
- einen Behälter (20), der zum Aufnehmen einer Mehrzahl von Kapseln (100) geeignet ist;
- mindestens eine Zuführleitung (2) zum Fördern der Kapseln (100) aus dem Behälter (20) zu Übertragungsmitteln (201) der Füllmaschine (200) in einer einzigen Reihe, die entlang einer Zuführrichtung (X) ausgerichtet ist;
- Sensormittel (3), die der Zuführleitung (2) zugeordnet und ausgebildet sind, eine gegenseitige Position zwischen dem Deckel (101) und dem Körper (102) jeder Kapsel (100) beim Durchlaufen der Zuführleitung (2) zu erfassen, um zu erkennen, ob jede Kapsel (100) eine vordefinierte erste Ausrichtung (A) zwischen dem Deckel (101) und dem Körper (102) in Bezug auf die Zuführrichtung (X), die als korrekt angesehen wird, oder eine zweite Ausrichtung (B), die der ersten Ausrichtung (A) entgegengesetzt ist und stattdessen als falsch angesehen wird, besitzt; und
- Ausrichtungsmittel (4), die in Bezug auf die Zuführrichtung (X) stromabwärts von den Sensormitteln (3) angeordnet und der Zuführleitung (2) zugeordnet sind;
**dadurch gekennzeichnet, dass** die Ausrichtungsmittel (4) ausgebildet sind,
- jede Kapsel (100), die von den Sensormitteln (3) als sich in der falschen zweiten Ausrichtung (B) ausgerichtet bewegend erkannt wurde, um 180° um eine Drehachse (Y), die im Wesentlichen orthogonal zu der Zuführrichtung (X) ist, zu drehen und
- jede Kapsel (100), die von den Sensormitteln (3) als sich in der korrekten ersten Ausrichtung (A) ausgerichtet bewegend erkannt wurde, ohne Drehung hindurchgehen zu lassen,
so dass alle Kapseln in der korrekten ersten Ausrichtung (A) ausgerichtet sind, wenn sie die Übertragungsmittel (201) erreichen, wobei die Zuführleitung (2) einen ersten Abschnitt (2a), der direkt stromaufwärts der Ausrichtungsmittel (4) positioniert ist, und einen zweiten Abschnitt (2b), der zwischen den Ausrichtungsmitteln (4) und den Übertragungsmitteln (201) positioniert ist, aufweist, wobei der erste Abschnitt und der zweite Abschnitt (2a, 2b) vertikal ausgerichtet angeordnet sind.

2. Zuführvorrichtung (1) nach Anspruch 1, wobei die Ausrichtungsmittel ein Ausrichtungselement (4) aufweisen, das eine im Wesentlichen zylindrische Form besitzt, in die Zuführleitung (2) eingesetzt und um die Drehachse (Y) drehbar ist, wobei das Ausrichtungselement (4) einen Durchgangssitz (6) aufweist, der im Wesentlichen orthogonal zu der Drehachse (Y) ist, vertikal ausgerichtet angeordnet ist, wenn er die Kapsel (100) aus dem ersten Abschnitt (2a) aufnimmt, und so dimensioniert ist, dass er eine einzige Kapsel (100) aufnehmen kann.

3. Zuführvorrichtung (1) nach Anspruch 1 oder 2, aufweisend Sperrmittel (7), die in Bezug auf die Zuführrichtung (X) benachbart und stromabwärts von den Ausrichtungsmitteln (4) positioniert sind und in den zweiten Abschnitt (2b) der Zuführleitung (2) einsetzbar sind, um den Durchgang der Kapseln (100) zu sperren, insbesondere um eine einzige Kapsel (100) innerhalb der Ausrichtungsmittel (4) zurückzuhalten.

4. Zuführvorrichtung (1) nach einem der vorstehenden Ansprüche, aufweisend Stoppmittel (8), die in Bezug auf die Zuführrichtung (X) benachbart und stromaufwärts von den Ausrichtungsmitteln (4) positioniert und ausgebildet sind, an Kapseln (100) anzuliegen und deren Weiterbewegung zu stoppen.

5. Zuführvorrichtung (1) nach Anspruch 4, wobei die Sensormittel (3) in Bezug auf die Zuführrichtung (X) stromaufwärts von den Stoppmitteln (8) positioniert sind.

6. Zuführvorrichtung (1) nach Anspruch 4 oder 5, wobei die Stoppmittel (8) teilweise in eine seitliche Öffnung (12) eingesetzt sind, die an dem ersten Abschnitt (2a) der Zuführleitung (2) ausgebildet ist, und zwischen einer Anschlagposition (R1), in der sie das Herabfallen der Kapsel (100) blockieren, und einer Freigabeposition (R2), in der sie die Bewegung der Kapsel (100) ermöglichen, beweglich ausgebildet sind.

7. Zuführvorrichtung (1) nach einem der vorstehenden Ansprüche, wobei die mindestens eine Zuführleitung (2) eine Mehrzahl von parallel zueinander angeordneten Zuführleitungen (2) ist, wobei jede Zuführleitung (2) jeweiligen Sensormitteln (3) und jeweiligen Ausrichtungsmitteln (4) zugeordnet ist.

8. Zuführvorrichtung (1) nach einem der vorstehenden Ansprüche, wobei die Sensormittel (3), insbesondere von einem optischen Typ, ausgebildet sind, mögliche Defekte der Kapseln (100) zu erkennen, insbesondere Kapseln (100), die mit zwei mit einem gemeinsamen Körper (102) verbundenen Deckeln (101) versehen sind.

9. Zuführvorrichtung (1) nach einem der vorstehenden Ansprüche, aufweisend eine Steuereinheit (50), die mit den Sensormitteln (3) und mit Antriebsmitteln (14) der Ausrichtungsmittel (4) verbunden ist, wobei die Steuereinheit (50) ausgebildet ist, die Antriebsmittel (14) auf der Grundlage von Signalen zu steuern, die von den Sensormitteln (3) in Bezug auf die Ausrichtung jeder Kapsel (100) gesendet werden.

10. Verfahren zum Zuführen von Kapseln (100), die aus einem Deckel (101) und einem Körper (102) bestehen, zu Übertragungsmitteln (201) einer Füllmaschine (200), aufweisend:
- Anordnen eines Behälters (20), der zum Aufnehmen einer Mehrzahl von Kapseln (100) geeignet ist;
- Anordnen mindestens einer Zuführleitung (2), die ausgebildet ist, die Kapseln (100) aus dem Behälter (20) in einer einzigen Reihe, die entlang einer Zuführrichtung (X) ausgerichtet ist, zu den Übertragungsmitteln (201) der Füllmaschine (200) zu fördern;
- Erfassen einer gegenseitigen Position zwischen dem Deckel (101) und dem Körper (102) jeder Kapsel (100) beim Durchlaufen der Zuführleitung (2) mittels Sensormitteln (3), um zu erkennen, ob jede Kapsel (100) eine festgelegte erste Ausrichtung (A) zwischen dem Deckel (101) und dem Körper (102) in Bezug auf die Zuführrichtung (X), die als korrekt angesehen wird, oder eine zweite Ausrichtung (B), die der ersten Ausrichtung (A) entgegengesetzt ist und stattdessen als falsch angesehen wird, besitzt;
- Anordnen von Ausrichtungsmitteln (4), die der Zuführleitung (2) zugeordnet sind und einen Durchgangssitz (6) aufweisen, der so dimensioniert ist, dass die Kapseln (100) hindurchpassen;
**dadurch gekennzeichnet, dass** es zudem aufweist:
- Anordnen der Ausrichtungsmittel (4) mit dem Durchgangssitz (6), der vertikal ist; und
- Drehen jeder Kapsel (100), die von den Sensormitteln (3) als sich in der falschen zweiten Ausrichtung (B) ausgerichtet bewegend erkannt wurde, um 180° mittels der Ausrichtungsmittel (4) um eine Drehachse (Y), die im Wesentlichen orthogonal zu der Zuführrichtung (X) ist; oder
- Hindurchgehen lassen jeder Kapsel (100), die von den Sensormitteln (3) als sich in der korrekten ersten Ausrichtung (A) ausgerichtet bewegend erkannt wurde, ohne Drehung durch den Durchgangssitz (6);
so dass alle Kapseln (100) in der korrekten ersten Ausrichtung (A) ausgerichtet sind, wenn sie die Übertragungsmittel (201) erreichen, wobei die Zuführleitung (2) einen ersten Abschnitt (2a), der direkt stromaufwärts der Ausrichtungsmittel (4) positioniert ist, und einen zweiten Abschnitt (2b), der zwischen den Ausrichtungsmitteln (4) und den Übertragungsmitteln (201) positioniert ist, aufweist, wobei der erste Abschnitt und der zweite Abschnitt (2a, 2b) vertikal ausgerichtet angeordnet sind.

11. Verfahren nach Anspruch 10, aufweisend ein Anordnen der aus dem Behälter (100) kommenden Kapseln (100) in der Zuführleitung (2) mit einer jeweiligen Längsachse (W) parallel zu der Zuführrichtung (X), wobei die Kapseln (100) in der ersten Ausrichtung (A) angeordnet sind, wenn ihre jeweiligen Böden (102) den Übertragungsmitteln (201) zugewandt sind (201), und in der zweiten Ausrichtung (B) angeordnet sind, wenn ihre jeweiligen Deckel (101) den Übertragungsmitteln (201) zugewandt sind.

12. Verfahren nach Anspruch 10 oder 11, zudem aufweisend ein Erkennen möglicher Defekte der Kapseln (100), insbesondere von Kapseln, die zwei mit einem gemeinsamen Körper (102) verbundene Deckel (101) aufweisen, mittels den Sensormitteln (3).

13. Verfahren nach einem der Ansprüche 10 bis 12, wobei die Kapseln (100) die Ausrichtungsmittel (4) erreichen, indem sie vertikal entlang des ersten Abschnitts (2a) nach unten fallen.

## Revendications

1. Appareil d'alimentation (1) d'une machine de remplissage (200) pour l'alimentation en capsules (100) formées par un couvercle (101) et un corps (102), comprenant :
- une trémie (20) adaptée pour contenir une pluralité de capsules (100) ;
- au moins un conduit d'alimentation (2) pour convoyer les capsules (100) depuis ladite trémie (20) vers des moyens de transfert (201) de ladite machine de remplissage (200) en une seule rangée alignée le long d'une direction d'alimentation (X) ;
- des moyens capteurs (3) associés audit conduit d'alimentation (2) et configurés pour détecter une position réciproque entre le couvercle (101) et le corps (102) de chaque capsule (100) en passant à travers ledit conduit d'alimentation (2), afin de détecter si chaque capsule (100) présente une première orientation (A) prédéfinie entre le couvercle (101) et le corps (102) par rapport à la direction d'alimentation (X) qui est considérée comme correcte, ou une deuxième orientation (B), opposée à la première orientation (A), qui est plutôt considérée comme mauvaise ; et
- des moyens d'orientation (4) situés en aval des moyens capteurs (3) par rapport à la direction d'alimentation (X) et associés audit conduit d'alimentation (2) ;
**caractérisé en ce que** lesdits moyens d'orientation (4) sont configurés :
- pour faire tourner de 180° autour d'un axe de rotation (Y), sensiblement orthogonal à ladite direction d'alimentation (X), chaque capsule (100) qui a été détectée par les moyens capteurs (3) comme se déplaçant de manière orientée selon la deuxième orientation (B) correcte, et
- pour être traversés sans rotation par chaque capsule (100) qui ont été détectées par les moyens capteurs (3) comme se déplaçant de manière orientée selon la première orientation (A) correcte,
de sorte que toutes les capsules soient orientées selon la première orientation (A) correcte lorsqu'elles atteignent les moyens de transfert (201), ledit conduit d'alimentation (2) comprenant une première section (2a) positionnée directement en amont des moyens d'orientation (4) et une deuxième section (2b) positionnée entre lesdits moyens d'orientation (4) et lesdits moyens de transfert (201), lesdites première section et deuxième section (2a, 2b) étant agencées de manière alignée verticalement.

2. Appareil d'alimentation (1) selon la revendication 1, dans lequel lesdits moyens d'orientation comprennent un élément d'orientation (4), ayant une forme sensiblement cylindrique, installé dans le conduit d'alimentation (2) et pouvant tourner autour dudit axe de rotation (Y), ledit élément d'orientation (4) comprenant un siège traversant (6), qui est sensiblement orthogonal audit axe de rotation (Y), agencé de manière alignée verticalement lors de la réception de la capsule (100) à partir de ladite première section (2a) et dimensionné pour loger une seule capsule (100).

3. Appareil d'alimentation (1) selon la revendication 1 ou 2, comprenant des moyens de blocage (7) positionnés de manière adjacente et en aval desdits moyens d'orientation (4), par rapport à ladite direction d'alimentation (X), et insérables dans ladite deuxième section (2b) dudit conduit d'alimentation (2) afin de bloquer le passage desdites capsules (100), notamment pour retenir une seule capsule (100) au sein desdits moyens d'orientation (4).

4. Appareil d'alimentation (1) selon une quelconque revendication précédente, comprenant des moyens d'arrêt (8) positionnés de manière adjacente et en amont desdits moyens d'orientation (4) par rapport à ladite direction d'alimentation (X) et configurés pour buter contre et arrêter l'avancement des capsules (100).

5. Appareil d'alimentation (1) selon la revendication 4, dans lequel lesdits moyens capteurs (3) sont positionnés en amont desdits moyens d'arrêt (8) par rapport à ladite direction d'alimentation (X).

6. Appareil d'alimentation (1) selon la revendication 4 ou 5, dans lequel lesdits moyens d'arrêt (8) sont partiellement insérés dans une ouverture latérale (12) réalisée sur ladite première section (2a) dudit conduit d'alimentation (2) et configurée mobile entre une position de butée (R1) pour bloquer la chute de la capsule (100), et une position de désengagement (R2) pour permettre le déplacement de la capsule (100).

7. Appareil d'alimentation (1) selon une quelconque revendication précédente, dans lequel ledit au moins un conduit d'alimentation (2) est une pluralité de conduits d'alimentation (2) agencés parallèlement les uns aux autres, chaque conduit d'alimentation (2) étant associé à des moyens capteurs (3) respectifs et à des moyens d'orientation (4) respectifs.

8. Appareil d'alimentation (1) selon une quelconque revendication précédente, dans lequel lesdits moyens capteurs (3), notamment de type optique, sont configurés pour détecter d'éventuels défauts desdites capsules (100), notamment des capsules (100) munies de deux couvercles (101) couplés à un corps (102) commun.

9. Appareil d'alimentation (1) selon une quelconque revendication précédente, comprenant une unité de commande (50) connectée auxdits moyens capteurs (3) et aux moyens d'entraînement (14) desdits moyens d'orientation (4), ladite unité de commande (50) étant configurée pour commander lesdits moyens d'entraînement (14) sur la base de signaux envoyés par lesdits moyens capteurs (3) relatifs à l'orientation de chaque capsule (100).

10. Procédé d'alimentation en capsules (100) formées par un couvercle (101) et un corps (102) vers des moyens de transfert (201) d'une machine de remplissage (200), comprenant :
- l'agencement d'une trémie (20) adaptée pour contenir une pluralité de capsules (100) ;
- l'agencement d'au moins un conduit d'alimentation (2) configuré pour convoyer les capsules (100) à partir de ladite trémie (20) vers lesdits moyens de transfert (201) de ladite machine de remplissage (200) en une seule rangée alignée le long d'une direction d'alimentation (X) ;
- la détection par des moyens capteurs (3) d'une position réciproque entre le couvercle (101) et le corps (102) de chaque capsule (100) en passant par le conduit d'alimentation (2), de manière à détecter si chaque capsule (100) présente une première orientation (A) établie entre le couvercle (101) et le corps (102) par rapport à la direction d'alimentation (X), qui est considérée comme correcte, ou une deuxième orientation (B), opposée à la première orientation (A), qui est plutôt considérée comme mauvaise ;
- l'agencement de moyens d'orientation (4) associés audit conduit d'alimentation (2) et comprenant un siège traversant (6) dimensionné pour être traversé par les capsules (100) ;
**caractérisé en ce qu'**il comprend en outre :
- l'agencement desdits moyens d'orientation (4) avec le siège traversant (6) qui est vertical ; et
- l'amenée en rotation de 180° au moyen desdits moyens d'orientation (4) autour d'un axe de rotation (Y), qui est sensiblement orthogonal à ladite direction d'alimentation (X), de chaque capsule (100) qui a été détectée par les moyens capteurs (3) comme se déplaçant de manière orientée selon la deuxième orientation (B) mauvaise ; ou
- le fait de permettre l'avancement sans rotation, à travers ledit siège traversant (6), de chaque capsule (100) qui a été détectée par les moyens capteurs (3) comme se déplaçant de manière orientée selon la première orientation (A) correcte ;
de sorte que toutes les capsules (100) soient orientées selon la première orientation (A) correcte lorsqu'elles atteignent les moyens de transfert (201), dans lequel ledit conduit d'alimentation (2) comprend une première section (2a) positionnée directement en amont des moyens d'orientation (4) et une deuxième section (2b) positionnée entre lesdits moyens d'orientation (4) et lesdits moyens de transfert (201), lesdites première section et deuxième section (2a, 2b) étant agencées de manière alignée verticalement.

11. Procédé selon la revendication 10, comprenant l'agencement desdites capsules (100) provenant de ladite trémie (100) dans ledit conduit d'alimentation (2) avec un axe longitudinal (W) respectif parallèle à ladite direction d'alimentation (X), lesdites capsules (100) étant agencées dans ladite première orientation (A) lorsque leurs fonds (102) respectifs sont orientés vers lesdits moyens de transfert (201) et dans ladite deuxième orientation (B) lorsque leurs couvercles (101) respectifs sont orientés vers lesdits moyens de transfert (201).

12. Procédé selon la revendication 10 ou 11, comprenant en outre la détection au moyen desdits moyens capteurs (3) d'éventuels défauts desdites capsules (100), en particulier des capsules comprenant deux couvercles (101) couplés à un corps (102) commun.

13. Procédé selon l'une quelconque des revendications 10 à 12, dans lequel les capsules (100) atteignent les moyens d'orientation (4) en tombant verticalement le long de la première section (2a).
